# EUROPEAN PATENT APPLICATION

(11) **EP 1 082 895 A1**
(43) Date of publication of application: **14.03.2001**
(21) Application number: 00119555.1
(22) Date of filing: 07.09.2000
(51) Int. Cl.: A01K 5/00

(54) **Cutter-mixer wagon with vertical axis for fodder and grass silage**

(30) Priority: 09.09.1999 IT VI990075 U
(71) Applicant: Loppoli, Giuseppe, 35010 Grantorto (PD) (IT)
(72) Inventor: Loppoli, Giuseppe, 35010 Grantorto (PD) (IT)
(74) Representative: Bonini, Ercole

(57) **Abstract**

Cutter-mixer wagon (1) for fodder and grass silage, comprising a cutting-mixing screw (2) constituted by a container (3) with an opening (3a) facing upwards, supported by a frame (4) resting on wheels (5), the inside of said container being provided with a helical element (6) whose conical profile converges towards the opening (3a), said helical element rotating around a shaft (7) that defines a substantially vertical longitudinal rotation axis (Y). The inner lateral wall (3b) of the container (3) is provided with a plurality of cutting blades (8) projecting towards the inside of the container itself and provided with a cutting edge (8c), arranged in a substantially orthogonal position with respect to the longitudinal axis (Y) of the screw (2).

## Description

The invention concerns a cutter-mixer wagon for fodder and grass silage, provided with a cutting-mixing screw with vertical axis.

It is already known that cutter-mixer wagons are equipment for the cutting and mixing of hay, fodder and grass silage suitable for feeding livestock.

According to a known application, they comprise a screw with vertical axis consisting of a preferably cylindrical or truncated cone-shaped container mounted on a frame provided with wheels and with elements suitable for permitting towing by means of a tractor, the inside of said container being provided with a helical element.

The helical element is wound around a revolving shaft that defines the vertical longitudinal axis of the screw and is operated by the tractor engine, for example through a cardan-joint transmission.

The upper part of the container is provided with a main opening, through which the silage that must be processed is introduced, and with some secundary openings towards which the processed material is conveyed by the helical element for the unloading phase.

Near its outer edge the helical element is provided with a plurality of projecting blades, which can be fixed or rotating and are preferably provided with toothed profile to improve the cutting action during the rotation of the helical element.

In a known application, the blades rotate around a pin that fixes them to the helical element and during the operation of the screw they are set rotating around said pin by the friction they generate when in contact with the product to be processed.

According to another known application, the projecting blades are polygonal and are fixed to the outer edge of the screw, for example through welding.

The inner lateral wall of the container is provided with projecting elements, each one of which is arranged on a substantially vertical plane, in such a way as to be an obstacle to the movement of the products to be cut during the rotation of the helical element.

In fact, the presence of said projecting elements interrupts the flow of the material generated by the rotation of the helical element, and therefore the material is mixed better during the cutting operation carried out by the blades.

The drawback of the known applications described above is represented by the fact that the presence of said projecting elements does not facilitate the cutting action resulting from the rotation of the helical element.

The aim of the present invention is to overcome the above mentioned drawback.

In particular, one of the first aims of the invention is to increase the cutting efficiency of a cutter-mixer wagon with screw with vertical axis.

A further aim is that the cutter-mixer wagon object of the invention should be capable of mixing the cut product exactly like the known cutter-mixer wagons used for the same purpose do.

The aims mentioned above have been achieved through the implementation of a cutter-mixer wagon for fodder and grass silage, comprising a cutting-mixing screw constituted by a container with an opening facing upwards, supported by a frame resting on wheels, the inside of said container being provided with a helical element whose conical profile converges towards said opening, said helical element rotating around a shaft that defines a substantially vertical longitudinal rotation axis, and is characterized in that the inner lateral wall of said container is provided with a plurality of cutting blades projecting towards the inside of the container itself and equipped with at least one cutting edge, each one of said blades being in a substantially orthogonal position with respect to the longitudinal axis of said screw.

According to a favourite application of the invention, the cutting blades of the helical element are circular in shape, with toothed cutting profile, and are revolving on a pivoting axis.

To advantage, the invention ensures improved cutting efficiency and more accurate mixing compared to the known technique, thanks to the combined action of the blades present on the helical element and of the projecting blades present on the inner lateral wall of the container.

The mentioned aims and advantages will be highlighted in greater detail in the description of some among many possible applications of the invention in question, illustrated in the attached drawings, wherein:
- Fig. 1 shows a side view of the cutter-mixer wagon object of the invention;
- Fig. 2 is a top view of the wagon of Figure 1;
- Fig. 3 shows a detail of the cutting blades.

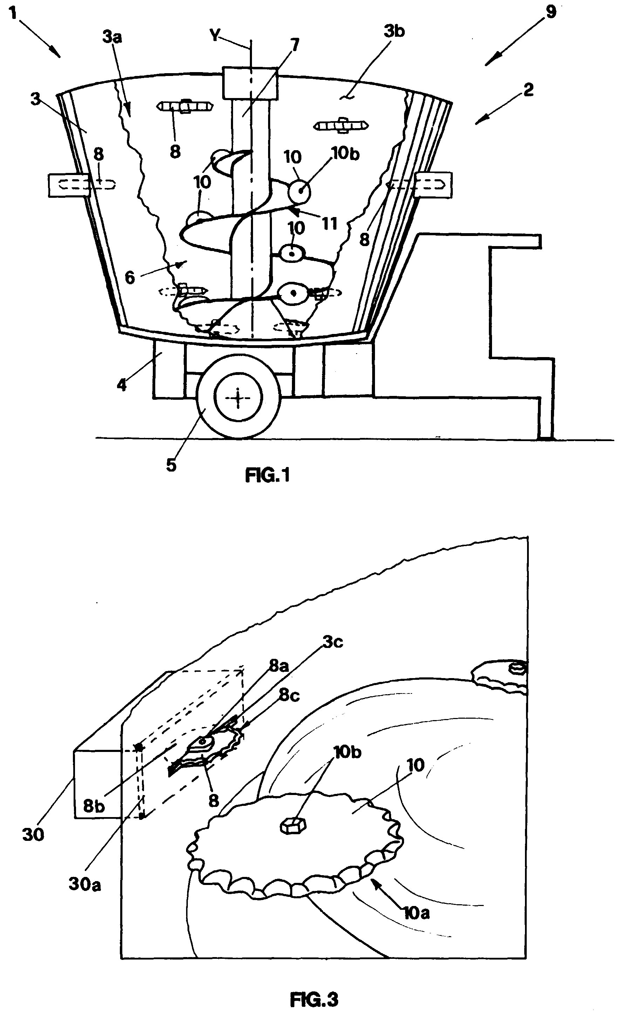

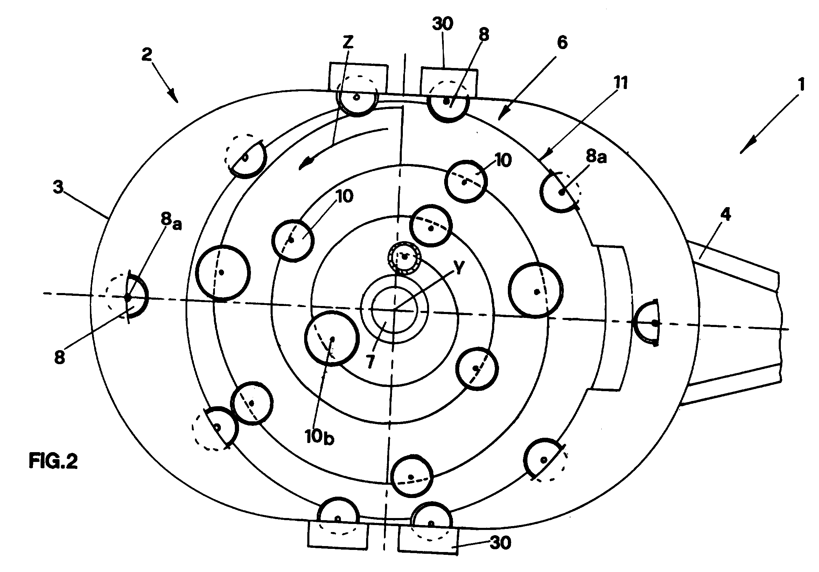

As it can be observed in Figures 1 and 2, the cutter-mixer wagon object of the invention, indicated as a whole by 1, comprises a cutting-mixing screw 2, constituted by a substantially truncated cone-shaped container 3 tapering upwards and provided with an upper opening 3a, supported by a frame 4 resting on wheels 5 and internally provided with a helical element 6.

The helical element 6, as it can be observed, has a conical profile converging towards the opening 3a and is wound around a rotary shaft 7 that defines a longitudinal vertical rotation axis Y coinciding with the longitudinal axis of the container 3.

As it can be observed in the figures and in Fig. 3 in particular, the inner lateral wall 3b of the container 3 is provided with a plurality of first blades 8 projecting towards the inside of the container 3.

Each blade is arranged on a substantially horizontal plane that intersects the longitudinal axis Y of the screw 2 and is positioned so that it passes through a slot 3c made in the container 3.

As it can be observed in Fig. 3, each blade is fixed by means of a pin 8a, if necessary provided with friction means suitable for permitting its controlled rotation when it comes into contact with the material to be cut, while its part 8b projects towards the outside of the container and is protected by a casing 30. Said casing is hinged to the container by means of a hinge 30a, so that it can be opened to reach the blade 8 and change it in case of need.

Each blade 8 is provided with a cutting edge with toothed profile 8c, to improve the cutting action on the material.

Analogous cutting blades with circular profile, each one indicated by 10, are positioned on the outer edge 11 of the screw 6, fixed in idle position through a pin 10b, and they also are provided with a cutting edge 10a with toothed profile.

In this way, the cutting efficiency is improved owing to the cutting action on the material, which is generated, mainly in correspondence with the screw bottom, when, during the rotation of the helical element , the blades 8 positioned on the container wall cross with the blades 10 positioned on the helical element.

The presence of the first blades 8 on the lateral wall of the container significantly improves the efficiency of the mixer wagon, so that its cutting yield almost reaches that of the wagons with horizontal screws.

As far as the blades are concerned, they can be present in any number and their shape can differ from that described and illustrated in the figures.

Furthermore, in different applications the blades may be fixed instead of rotary.

All the changes mentioned and any other not illustrated and not described that may be made on the invention upon implementation are included in the inventive concepts expressed in the following claims and are therefore to be considered protected by the patent.

## Claims

1. Cutter-mixer wagon (1) for fodder and grass silage, comprising a cutting-mixing screw (2) constituted by a container (3) with an opening (3a) facing upwards, supported by a frame (4) resting on wheels (5), the inside of said container being provided with a helical element (6) whose conical profile converges towards said opening (3a), said helical element rotating around a shaft (7) that defines a substantially vertical longitudinal rotation axis (Y), **characterized in that** the inner lateral wall (3b) of said container (3) is provided with a plurality of cutting blades (8) projecting towards the inside of the container itself and provided with at least one cutting edge (8c), each one of said blades being in a substantially orthogonal position with respect to the longitudinal axis (Y) of said screw (2).

2. Cutter-mixer wagon (1) according to claim 1), **characterized in that** said helical element (6) is provided with projecting blades (10) on its outer edge (11).

3. Cutter-mixer wagon (1) according to claim 1) or 2), **characterized in that** each one of said cutting and projecting blades (8, 10) is fixed.

4. Cutter-mixer wagon according to claim 1), **characterized in that** said cutting and projecting blades (8, 10) are circular in shape and idle with respect to the corresponding connection means (8a; 10b).

5. Cutter-mixer wagon (1) according to claim 4), **characterized in that** said connection means are pins (8a; 10b).

6. Cutter-mixer wagon (1) according to any of the claims from 1) to 4), **characterized in that** each one of said cutting and projecting blades (8; 10) is provided with a toothed cutting edge (8c, 10a).

7. Cutter-mixer wagon (1) according to claim 1), **characterized in that** each one of said cutting blades (8) applied to said container (3) is positioned so that it passes through a slot (3a) made in said container.

8. Cutter-mixer wagon (1) according to claim 7), **characterized in that** a part (8b) of said blade (8) projects outside said container (3) and is housed inside a casing (30) connected to the container (3) by means of a hinge (30a).
